# EUROPEAN PATENT APPLICATION

(11) **EP 4 509 978 A1**
(43) Date of publication of application: **19.02.2025**
(21) Application number: 23935900.3
(22) Date of filing: 12.09.2023
(51) Int. Cl.: G06F 3/14, G06F 9/451

(54) **VIRTUAL SCREEN IMPLEMENTATION METHOD AND APPARATUS, AND DEVICE AND STORAGE MEDIUM**

(30) Priority: 09.06.2023 CN 202310690596
(71) Applicant: Ecarx (Hubei) Tech Co., Ltd., Wuhan, Hubei 430056 (CN)
(72) Inventor: TIAN, Guochun, Wuhan, Hubei 430056 (CN); MA, Li, Wuhan, Hubei 430056 (CN); LIU, Liang, Wuhan, Hubei 430056 (CN)
(74) Representative: Ipside
(86) International application number: PCT/CN2023/118223
(87) International publication number: WO 2024/250474

(57) **Abstract**

A virtual screen implementation method, an apparatus, a device and a storage medium, obtaining (S101) screen identification information of a target guest operating system; generating (S102) first display information according to the screen identification information, screen configuration information and physical screen information of a host system, where the screen configuration information includes coordinate information and enable information of a plurality of virtual screens, and the first display information represents a position and a size of a target virtual screen in a physical screen of the host system and enable information of the target virtual screen; generating (S103) the target virtual screen on the physical screen of the host system according to the first display display information, and providing a display output for the target guest operating system.

## Description

This application claims priority to Chinese Patent Application No. 202310690596.1, filed to the China National Intellectual Property Administration on June 09, 2023, which is hereby incorporated by reference in its entirety.

### TECHNICAL FIELD

The present application relates to the field of virtualization technologies and, for example, to a virtual screen implementation method, an apparatus, a device and a storage medium.

### BACKGROUND

At present, the application of virtualization technologies is becoming increasingly widespread. For example, in a multi-domain vehicle system, the virtualization technology is often used to improve hardware utilization and hardware resource configuration flexibility, in order to achieve the goal of reducing costs. For example, a "hairtail screen" requires a plurality of virtual machine systems to provide a display function, and the virtualization systems widely use an open-source virtual machine management program, i.e., quick emulator (Quick Emulator, QEMU), to provide the display function. However, components that can provide the display function, including QEMU, do not have the function of providing physical screen division.

In addition, some monitors can support picture in picture (Picture in Picture, PIP) and picture by picture (Picture by Picture, PBP) functions, and thus can display the content of multiple operating systems on one physical screen, achieving the division display of the physical screen. However, there are limitations in such screen division scheme implemented based on hardware, such as the need to provide specific hardware support; there is only one or a few pre-defined division layout settings, which cannot be modified by software; furthermore, the display of each operating system requires a hardware display interface, such as a high definition multimedia interface (High Definition Multimedia Interface, HDMI) or a Display Port interface, and so on.

### SUMMARY

The present application provides a virtual screen implementation method, an apparatus, a device and a storage medium, to provide a solution of a physical screen division for a component providing display function in the virtualization technology and overcome the defect that the screen division is implemented by using the hardware.

The present application provides a virtual screen implementation method, including:
obtaining screen identification information of a target guest operating system, where the screen identification information is used to uniquely identify a target virtual screen allocated to the target guest operating system;
generating first display information according to the screen identification information, screen configuration information and physical screen information of a host system, where the screen configuration information includes coordinate information and enable information of a plurality of virtual screens, and the first display information includes a position and a size of the target virtual screen in a physical screen of the host system and enable information of the target virtual screen;
generating the target virtual screen on the physical screen of the host system according to the first display information, and providing a display output for the target guest operating system, where the physical screen includes the plurality of virtual screens, and the plurality of virtual screens include the target virtual screen allocated to the target guest operating system.

The present application provides a virtual screen implementation apparatus, including:
an obtaining module, configured to obtain screen identification information of a target guest operating system, where the screen identification information is used to uniquely identify a target virtual screen allocated to the target guest operating system;
a first processing module, configured to generate first display information according to the screen identification information, screen configuration information and physical screen information of a host system, where the screen configuration information includes coordinate information and enable information of a plurality of virtual screens, and the first display information includes a position and a size of the target virtual screen in a physical screen of the host system and enable information of the target virtual screen;
a second processing module, configured to generate the target virtual screen on the physical screen of the host system according to the first display information, and provide a display output for the target guest operating system, where the physical screen includes the plurality of virtual screens, and the plurality of virtual screens include the target virtual screen allocated to the target guest operating system.

The present application provides an electronic device, including: a processor, and a memory in communication connection with the processor;
the memory is configured to store computer executable instructions;
the processor is configured to execute the computer executable instructions stored in the memory to implement the virtual screen implementation method provided in any one of embodiments described above.

The present application provides a computer readable storage medium storing computer executable instructions which, when executed by a processor, implement the virtual screen implementation method provided in any one of embodiments described above.

The present application provides a computer program product including computer executable instructions which, when executed by a processor, implement the virtual screen implementation method provided in any one of embodiments described above.

### BRIEF DESCRIPTION OF DRAWINGS

FIG. 1 is a schematic structural diagram of a system provided in an embodiment of the present application.
FIG. 2 is a schematic flowchart of a virtual screen implementation method provided in an embodiment of the present application.
FIG. 3 is another schematic flowchart of a virtual screen implementation method provided in an embodiment of the present application.
FIG. 4 is a schematic diagram of a physical screen divided into a plurality of virtual screens provided in an embodiment of the present application.
FIG. 5 is a schematic structural diagram of a virtual screen implementation apparatus provided in an embodiment of the present application.
FIG. 6 is another schematic structural diagram of a virtual screen implementation apparatus provided in an embodiment of the present application.
FIG. 7 is a schematic structural diagram of an electronic device provided in an embodiment of the present application.

### DESCRIPTION OF EMBODIMENTS

Exemplary embodiments will be described herein, their example representations are shown in the accompanying drawings. When referring to the accompanying drawings, unless otherwise indicated, the same numbers in different accompanying drawings represent the same or similar elements. The implementations described in the following exemplary embodiments do not represent all implementations consistent with the present application, but are only examples of methods and apparatuses consistent with some aspects of the present application as described in the appended claims.

The terms "first", "second", "third", "fourth", etc. (if any) in the specification and claims of the present application and the accompanying drawings are used to distinguish similar objects and do not necessarily describe a specific order or sequence. It should be understood that data used in this way can be interchanged in appropriate circumstances, so that the embodiments described herein can be implemented in an order other than those illustrated or described herein. In addition, the terms "comprise" and "have", as well as any variants thereof, are intended to cover non-exclusive inclusions, for example, may include these steps or units that are clearly listed in processes, methods, systems, products, or devices of a series of steps or units, as well as other steps or units that are not clearly listed, or other steps or units that are inherent to these processes, methods, products, or devices.

The present application provides a virtual screen implementation method, an apparatus, a device and a storage medium. In the virtual screen implementation method provided in the present application, through global virtual screen configuration, a physical screen can be divided into a plurality of virtual screens, and a virtual screen can also span a plurality of physical screens; through configuring the target virtual screen for the guest operating system, that is, the virtual machine system, the function of arbitrary division display on the physical screen can be realized according to user configuration for a multi-virtual-machine system, with the advantages of dynamically allocating virtual screens and dynamically setting virtual screen sizes, facilitating the flexible application of virtualization technology to the multi-domain vehicle system.

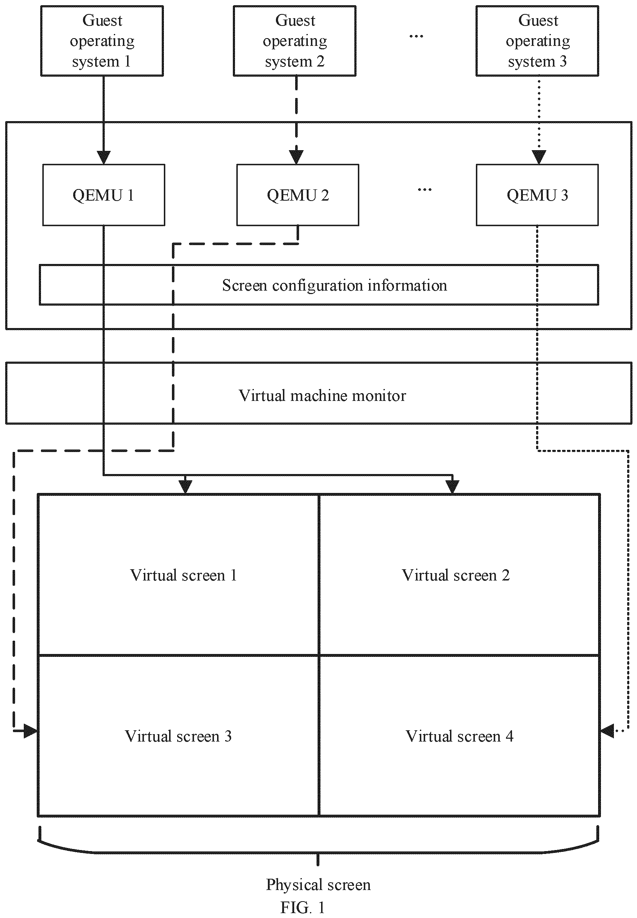

FIG. 1 is a schematic structural diagram of a system provided in an embodiment of the present application. As shown in FIG. 1, QEMU can be used together with a virtual machine monitor Hypervisor (such as keyboard video mouse (Keyboard Video Mouse, KVM), XEN (an open-source virtual machine monitor), etc.) to provide a simulated display device (video graphics array (Video Graphics Array, VGA)/graphics processing unit (Graphics Processing Unit, GPU)) and other functions for each guest operating system (Guest Operating System, Guest OS). Each Guest OS corresponds to a QEMU process. For example, Guest OS1 corresponds to QEMU1, Guest OS2 corresponds to QEMU2, Guest OS N corresponds to QEMU N, etc. These QEMU processes can provide one or more virtual screens for the Guest OS through the virtual screen function, and the one or more virtual screens are the target virtual screens that provide display output to the Guest OS. For example, as shown in FIG. 1, the target virtual screens providing a display output for Guest OS 1 are virtual screen 1 and virtual screen 2, the target virtual screen providing a display output for Guest OS 2 is virtual screen 3, and the target virtual screen providing a display output for Guest OS N is virtual screen 4. Virtual screen 1, virtual screen 2, virtual screen 3, and virtual screen 4 are screen identification information used to uniquely identify the virtual screen.

The virtual screen in embodiments of the present application refers to a screen defined with a position and a height in the virtual screen function, that is, each screen obtained by dividing the physical screen. The virtual screen function refers to the function of the virtual screen implementation method provided in embodiments of the present application, that is to say, using software to define the screen in order to realize any division of the physical screen. In addition, the virtual screen implementation method provided in embodiments of the present application can be configured to be executed by an electronic device on which the host system (Host) in FIG. 1 runs. The types of the electronic device in the embodiments of the present application are not limited. For example, the electronic device may be a vehicle controller of a vehicle, an electronic control unit (Electronic Control Unit, ECU) of the vehicle, etc.

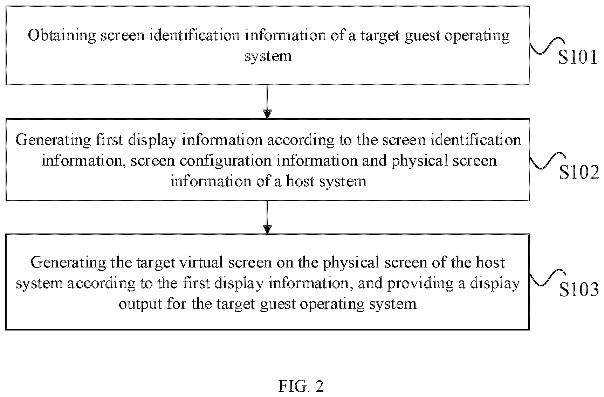

FIG. 2 is a schematic flowchart of a virtual screen implementation method provided in an embodiment of the present application. As shown in FIG. 2, the virtual screen implementation method provided in embodiments of the present application includes:

S101, obtaining screen identification information of a target guest operating system.

The screen identification information is used to uniquely identify a target virtual screen allocated to the target guest operating system.

Each virtual screen is uniquely identified by screen identification information. The target virtual screen is allocated to the target guest operating system according to the requirement of the target guest operating system. For example, virtual screen 1 and virtual screen 2 are allocated to Guest OS 1, and thus virtual screen 1 and virtual screen 2 are the screen identification information of the target guest operating system. Through the screen identification information of the target guest operating system, it can be determined which specific virtual screen(s) is/are allocated to the target guest operating system, the allocated virtual screen(s) is/are the target virtual screen(s) allocated to the target guest operating system. It can be seen that an amount of the target virtual screen may be one or more, depending on the display requirements of the target guest operating system in actual operating conditions.

An amount of the target guest operating system may be one or more, that is, the target guest operating system may be one or more of the plurality of guest operating systems shown in FIG. 1. For example, the target guest operating system may be Guest OS 1, Guest OS 1, or Guest OS 2, etc., depending on actual operating conditions.

S102, generating first display information according to the screen identification information, screen configuration information and physical screen information of a host system.

The screen configuration information includes coordinate information and enable information of a plurality of virtual screens, that is, all virtual screens. The coordinate information is used to represent a coordinate position, a width, and a height of a virtual screen, while the enable information is used to represent on or off of the display function. For example, if the enable information is valid, it is allowed to display, and if the enable information is invalid, it is not allowed to display. The plurality of virtual screens are multiple screens obtained by dividing the physical screen.

For example, a match is performed on the screen configuration information according to the screen identification information to obtain screen configuration information of the target virtual screen, and then, the first display information is generated according to the screen configuration information of the target virtual screen and the physical screen information.

For example, the match is performed on the screen configuration information according to the screen identification information to obtain the screen configuration information of the target virtual screen. Since the screen configuration information of the target virtual screen includes coordinate information of the target virtual screen and enable information of the target virtual screen, and the coordinate information of the target virtual screen includes a height and a width of the target virtual screen, the position and the size of the target virtual screen in the physical screen of the host system are initialized. The position and the size obtained after initialization, as well as the enable information of the target virtual screen, are determined as the first display information. The first display information may be generated according to the screen configuration information of the target virtual screen and the physical screen information, that is, the first display information includes the position and the size of the target virtual screen in the physical screen of the host system and the enable information of the target virtual screen.

Optionally, the process of initializing the position and the size of the target virtual screen in the physical screen of the host system may be: determining the position and the size of the target virtual screen in the physical screen according to the coordinate information of the target virtual screen, a physical screen position and a physical screen size of the host system. The physical screen information of the host system includes the physical screen position and the physical screen size of the host system.

S103, generating the target virtual screen on the physical screen of the host system according to the first display information, and providing a display output for the target guest operating system.

After the first display information is obtained, the target virtual screen is generated on the physical screen of the host system based on the position and the size of the target virtual screen in the physical screen of the host system in the first display information, as well as the enable information of the target virtual screen, so as to complete the process of generating the target virtual screen on the host system. The host system also provides the display output for the target guest operating system, so that the display content of the target guest operating system is displayed through the target virtual screen.

Optionally, a possible implementation for generating the target virtual screen on the physical screen of the host system according to the first display information in step 103 includes: generating a display window and a texture area of the display window on the physical screen according to the first display information, where the display window and the texture area are the target virtual screen, that is, the target virtual screen includes the display window and the texture area.

The position and the size of the target virtual screen in the physical screen of the host system in the first display information are used to indicate a position and a size of the display window on the physical screen, and the enable information of the target virtual screen in the first display information is used to generate a texture in the display window to obtain the texture area.

As can be seen from the description of the above embodiments, in the virtual screen implementation method provided in embodiments of the present application, through allocating the target virtual screen to the target guest operating system to obtain the screen identification information of the target guest operating system, generating first display information according to the screen identification information, screen configuration information and physical screen information of a host system, generating the target virtual screen on the physical screen of the host system based on the first display information, and providing a display output for the target guest operating system, the display content of the target guest operating system can be displayed on the target virtual screen. Since the screen configuration information includes coordinate information and enable information of a plurality of virtual screens, the target virtual screen can be allocated to the target guest operating system from the plurality of virtual screens , so as to complete the generation of the target virtual screen; and the display output is provided for the target guest operating system, so that arbitrary division display of the physical screen can be realized for the multi-virtual-machine system. In addition, through allocating the target virtual screen to the target guest operating system, the virtual screen implementation method provided in embodiments of the present application also has the advantages of dynamically allocating virtual screens and dynamically setting virtual screen sizes, thereby facilitating the flexible application of virtualization technology to the multi-domain vehicle system.

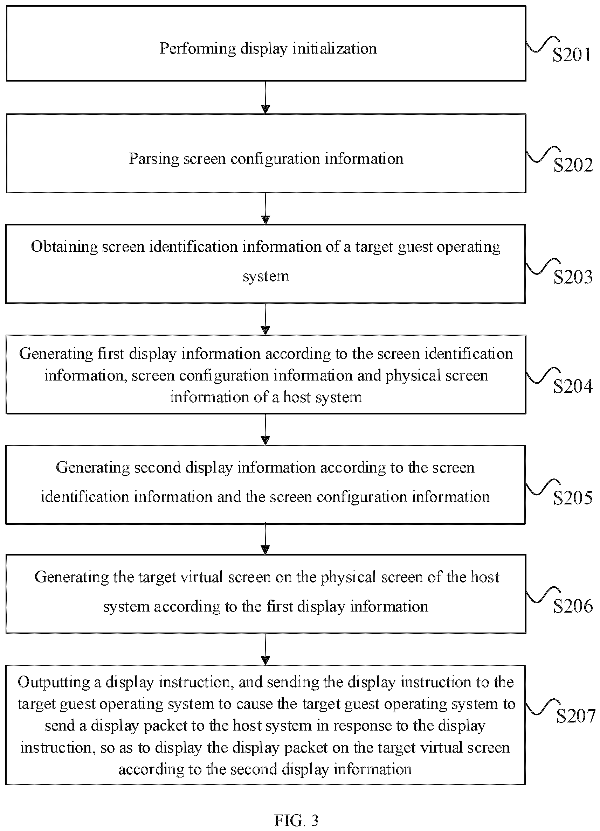

FIG. 3 is another schematic flowchart of a virtual screen implementation method provided in an embodiment of the present application. As shown in FIG. 3, the virtual screen implementation method provided in embodiments of the present application includes:
S201, performing display initialization.

The host system performs a display initialization operation, where the display initialization includes initializing the content related to UI display, such as a display service environment and an open graphics library context (Open Graphics Library, OpenGL) in the host system, according to a specific human-computer interaction (User Interface, UI) component. The specific UI component includes an UI library, an UI tool, etc. at an UI layer.

S202, parsing screen configuration information.

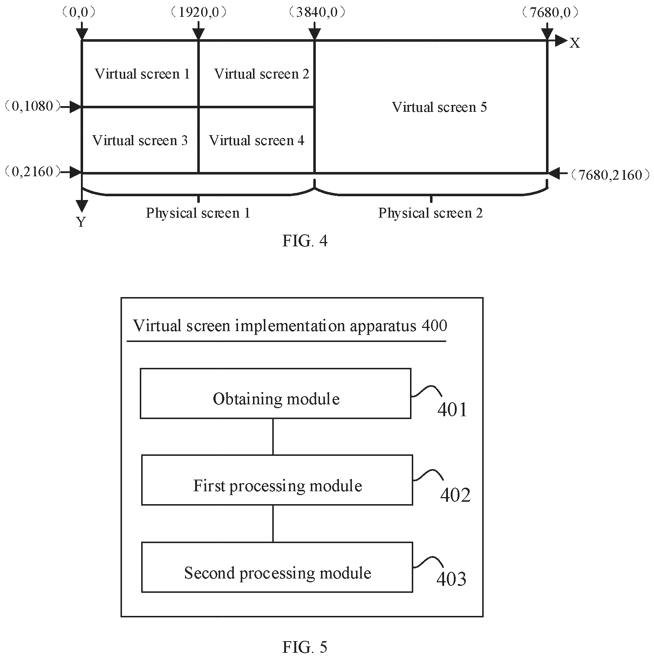

For example, obtain a configuration file and parse the screen configuration information into a global memory according to the configuration file for subsequent use. This step is also to obtain the coordinate information and the enable information of the virtual screen from the configuration file, so as to implement the global configuration of the virtual screen. The file content of the configuration file includes screen configuration information, the screen configuration information includes coordinate information and enable information of the plurality of virtual screens, and the coordinate information includes X coordinates, Y coordinates, and height and width of the plurality of virtual screens. The plurality of virtual screens are multiple screens obtained by dividing the physical screen. Referring to FIG. 4, which shows that two 3840 x 2160 physical screens are horizontally combined into one 7680 x 2160 logical screen, thus, it can be realized that a virtual screen spans a plurality of physical screens, and then this logical screen is divided into five virtual screens. Optionally, the coordinate information of each virtual screen in FIG. 4 can be described using YAML shown below:

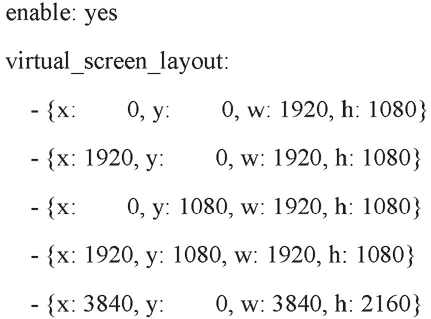

The coordinate information of each virtual screen described in the above YAML is, in turn, the coordinate information of virtual screen 1, virtual screen 2, virtual screen 3, virtual screen 4, and virtual screen 5. Each virtual screen is uniquely identified by screen identification information, which may be a serial number of the virtual screen.

S203, obtaining screen identification information of a target guest operating system.

The screen identification information is used to uniquely identify a target virtual screen allocated to the target guest operating system.

S204, generating first display information according to the screen identification information, screen configuration information and physical screen information of a host system.

The possible implementations, principles and technical effects of steps S203 and S204 are similar to the possible implementations, principles and technical effects of steps S101 and S102, reference for the details of which can be made to the foregoing embodiments, and the details will not be repeated herein.

S205, generating second display information according to the screen identification information and the screen configuration information.

For example, the match is performed on the screen configuration information according to the screen identification information to obtain the screen configuration information of the target virtual screen, and then, the second display information is generated according to the coordinate information of the target virtual screen. For example, a height and a width of the target virtual screen in the coordinate information of the target virtual screen are set to a size of the target virtual screen for the host system providing a display output for the target guest operating system, the size including a height and a width. In other words, the second display information is used to represent the size of the target virtual screen for the host system providing the display output for the target guest operating system.

Optionally, the size of the target virtual screen represented by the second display information may also be determined as a default display resolution of the target guest operating system.

There is no order between S204 and S205, and FIG. 3 is only a schematic diagram, not a limitation on the execution order.

S206, generating the target virtual screen on the physical screen of the host system according to the first display information.

The possible implementations, principles and technical effects of step S206 are similar to the possible implementations, principles and technical effects of step S103, reference for the details of which can be made to the foregoing embodiments, and the details will not be repeated herein.

S207, outputting a display instruction, and sending the display instruction to the target guest operating system to cause the target guest operating system to send a display packet to the host system in response to the display instruction, so as to display the display packet on the target virtual screen according to the second display information.

After the target virtual screen is generated, the host system provides the display output for the target guest operating system. The host system outputs the display instruction and sends the display instruction to the target guest operating system, and the target guest operating system receives the display instruction and sends a display packet to the host system in response to the display instruction, and thereby, the display packet is displayed on the target virtual screen of the physical screen of the host system according to the second display information, so as to display the display content of the target guest operating system, the display content being the content used for display corresponding to the display packet.

In the virtual screen implementation method provided in embodiments of the present application, through global virtual screen configuration, a physical screen can be divided into a plurality of virtual screens; in turn, through configuring the target virtual screen for the target guest operating system, that is, the target virtual machine system, the function of arbitrary division display can be realized on the physical screen for a multi-virtual-machine system according to user configuration. In addition to the advantages of not requiring specific hardware support, more flexible software division, a plurality of virtual machine systems only requiring one hardware display interface, and saving hardware costs, there are the advantages of dynamically allocating virtual screens and dynamically setting virtual screen sizes, facilitating the flexible application of virtualization technology to the multi-domain vehicle system.

FIG. 5 is a schematic structural diagram of a virtual screen implementation apparatus provided in an embodiment of the present application. As shown in FIG. 5, a virtual screen implementation apparatus 400 provided in embodiments of the present application includes: an obtaining module 401, configured to obtain screen identification information of a target guest operating system, where the screen identification information is used to uniquely identify a target virtual screen allocated to the target guest operating system; a first processing module 402, configured to generate first display information according to the screen identification information, screen configuration information and physical screen information of a host system, where the screen configuration information includes coordinate information and enable information of a plurality of virtual screens, and the first display information includes a position and a size of the target virtual screen in a physical screen of the host system and enable information of the target virtual screen; a second processing module 403, configured to generate the target virtual screen on the physical screen of the host system according to the first display information, and provide a display output for the target guest operating system, where the physical screen includes the plurality of virtual screens, and the plurality of virtual screens includes the target virtual screen allocated to the target guest operating system.

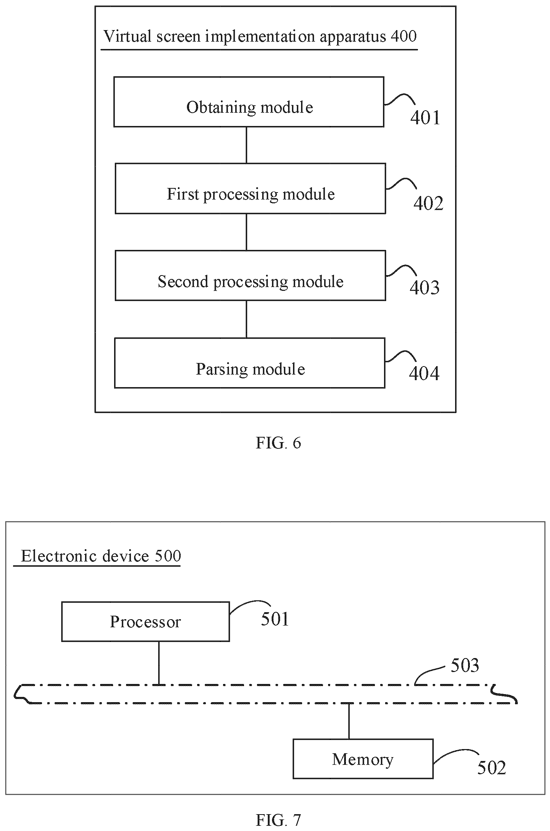

On the basis of FIG. 5, FIG. 6 is another schematic structural diagram of a virtual screen implementation apparatus provided in an embodiment of the present application. As shown in FIG. 6, the virtual screen implementation apparatus 400 provided in embodiments of the present application further includes: a parsing module 404, configured to obtain a configuration file and parse the screen configuration information into a global memory according to the configuration file, where file content of the configuration file includes the screen configuration information.

Optionally, the first processing module 402 is configured to: perform a match on the screen configuration information according to the screen identification information to obtain screen configuration information of the target virtual screen; generate the first display information according to the screen configuration information of the target virtual screen and the physical screen information, where the screen configuration information of the target virtual screen includes coordinate information of the target virtual screen and enable information of the target virtual screen, the coordinate information of the target virtual screen includes a height and a width of the target virtual screen, and the physical screen information includes a physical screen position and a physical screen size of the host system.

Optionally, the second processing module 403 is further configured to: perform a match on the screen configuration information according to the screen identification information to obtain screen configuration information of the target virtual screen; generate second display information according to coordinate information in the screen configuration information of the target virtual screen, where the second display information is used to represent a size of the target virtual screen for providing the display output for the target guest operating system.

Optionally, the second processing module 403 is configured to provide the display output for the target guest operating system by the following manner: sending a display instruction to the target guest operating system to cause the target guest operating system to send a display packet to the host system in response to the display instruction, so as to display the display packet on the target virtual screen according to the second display information.

Optionally, the second processing module 403 is configured to generate the target virtual screen by the following manner: generating a display window and a texture area of the display window on the physical screen according to the first display information, where the target virtual screen includes the display window and the texture area.

Optionally, an amount of the target guest operating system is one or more, and an amount of the target virtual screen is one or more.

Optionally, the virtual screen implementation apparatus 400 further includes: a display initialization module, configured to: perform display initialization, where the display initialization includes initializing a display service environment and an open graphics library context in the host system according to a specific UI component.

The virtual screen implementation apparatus provided in embodiments of the present application can perform the steps of the virtual screen implementation method in the method embodiments described above, and the realization principles and technical effects thereof are similar and will not be repeated herein.

FIG. 7 is a schematic structural diagram of an electronic device provided in an embodiment of the present application. As shown in FIG. 7, this electronic device 500 may include a processor 501 and a memory 502 in communication connection with the processor 501.

The memory 502 is configured to store programs. The programs may include program codes, the program codes include computer executable instructions.

The memory 502 may include a high-speed random access memory (Random Access Memory, RAM) storage, as well as a non-volatile memory (Non-volatile memory), such as at least one disk storage.

The processor 501 is configured to execute computer executable instructions stored in the memory 502 to implement the steps of the virtual screen implementation method in the above embodiments.

The processor 501 may be a central processing unit (Central Processing Unit, CPU), an application specific integrated circuit (Application Specific Integrated Circuit, ASIC), or one or more integrated circuits configured to implement the embodiments of the present application.

Optionally, the memory 502 may be independent or integrated with the processor 501. When the memory 502 is a device independent of the processor 501, the electronic device 500 may also include a bus 503 configured to connect the processor 501 and the memory 502. The bus may be an industry standard architecture (Industry Standard Architecture, ISA) bus, a peripheral component interconnect (Peripheral Component Interconnect, PCI) bus, or an extended industry standard architecture (Extended Industry Standard Architecture, EISA) bus. The bus may be divided into an address bus, a data bus, a control bus, etc., but this does not mean that there is only one bus or one type of bus.

Optionally, if the memory 502 and the processor 501 are implemented by integration on a single chip, the memory 502 and the processor 501 can communicate through an internal interface.

The present application also provides a computer readable storage medium. The computer readable storage medium may include a USB flash disk, a mobile hard disk, a read-only memory (Read-Only Memory, ROM), a random access memory (RAM, Random Access Memory), a magnetic disk or an optical disk, and other media that can store program codes. The computer readable storage medium stores computer executable instructions, and the computer executable instructions are used for the steps in the method described in the above embodiments.

The present application also provides a computer program product including computer executable instructions which, when executed by a processor, implement steps of the method in the embodiments described above.

## Claims

1. A virtual screen implementation method, comprising:
obtaining screen identification information of a target guest operating system, wherein the screen identification information is used to uniquely identify a target virtual screen allocated to the target guest operating system;
generating first display information according to the screen identification information, screen configuration information and physical screen information of a host system, wherein the screen configuration information comprises coordinate information and enable information of a plurality of virtual screens, and the first display information comprises a position and a size of the target virtual screen in a physical screen of the host system and enable information of the target virtual screen;
generating the target virtual screen on the physical screen of the host system according to the first display information, and providing a display output for the target guest operating system, wherein the physical screen comprises the plurality of virtual screens, and the plurality of virtual screens comprise the target virtual screen allocated to the target guest operating system.

2. The virtual screen implementation method according to claim 1, wherein before the obtaining the screen identification information of the target guest operating system, the method further comprises:
obtaining a configuration file and parsing the screen configuration information into a global memory according to the configuration file, wherein file content of the configuration file comprises the screen configuration information.

3. The virtual screen implementation method according to claim 2, wherein the generating the first display information according to the screen identification information, the screen configuration information and the physical screen information of the host system comprises:
performing a match on the screen configuration information according to the screen identification information to obtain screen configuration information of the target virtual screen;
generating the first display information according to the screen configuration information of the target virtual screen and the physical screen information;
wherein the screen configuration information of the target virtual screen comprises coordinate information of the target virtual screen and enable information of the target virtual screen, the coordinate information of the target virtual screen comprises a height and a width of the target virtual screen, and the physical screen information comprises a physical screen position and a physical screen size of the host system.

4. The virtual screen implementation method according to claim 2, wherein before the generating the target virtual screen on the physical screen of the host system according to the first display information, the method further comprises:
performing a match on the screen configuration information according to the screen identification information to obtain screen configuration information of the target virtual screen;
generating second display information according to coordinate information in the screen configuration information of the target virtual screen, wherein the second display information is used to represent a size of the target virtual screen for providing the display output for the target guest operating system.

5. The virtual screen implementation method according to claim 4, wherein the providing the display output for the target guest operating system comprises:
sending a display instruction to the target guest operating system to cause the target guest operating system to send a display packet to the host system in response to the display instruction, so as to display the display packet on the target virtual screen according to the second display information.

6. The virtual screen implementation method according to any one of claims 1 to 5, wherein the generating the target virtual screen on the physical screen of the host system according to the first display information comprises:
generating a display window and a texture area of the display window on the physical screen according to the first display information, wherein the target virtual screen comprises the display window and the texture area.

7. The virtual screen implementation method according to claim 1, wherein an amount of the target guest operating system is one or more, and an amount of the target virtual screen is one or more.

8. The virtual screen implementation method according to claim 5, wherein before the parsing the screen configuration information, the method further comprises:
performing display initialization, wherein the display initialization comprises initializing a display service environment and an open graphics library context in the host system according to a specific human-computer interaction UI component.

9. A virtual screen implementation apparatus, comprising:
an obtaining module, configured to obtain screen identification information of a target guest operating system, wherein the screen identification information is used to uniquely identify a target virtual screen allocated to the target guest operating system;
a first processing module, configured to generate first display information according to the screen identification information, screen configuration information and physical screen information of a host system, wherein the first display information comprises a position and a size of the target virtual screen in a physical screen of the host system and enable information of the target virtual screen, and the screen configuration information comprises coordinate information and enable information of a plurality of virtual screens;
a second processing module, configured to generate the target virtual screen on the physical screen of the host system according to the first display information, and provide a display output for the target guest operating system, wherein the physical screen comprises the plurality of virtual screens, and the plurality of virtual screens comprise the target virtual screen allocated to the target guest operating system.

10. An electronic device, comprising: a processor, and a memory in communication connection with the processor;
the memory is configured to store computer executable instructions;
the processor is configured to execute the computer executable instructions stored in the memory to implement the virtual screen implementation method according to any one of claims 1 to 8.

11. A computer readable storage medium, storing computer executable instructions which, when executed by a processor, implement the virtual screen implementation method according to any one of claims 1 to 8.
